# EUROPEAN PATENT SPECIFICATION

(11) **EP 1 831 605 B1**
(45) Date of publication and mention of the grant of the patent: **21.09.2016**
(21) Application number: 05771826.4
(22) Date of filing: 09.08.2005
(51) Int. Cl.: F23C 6/04, F23C 9/00, F23D 14/22, F23D 14/32, F23L 7/00

(54) **A METHOD PERTAINING TO COMBUSTION**
VERFAHREN ZUR AUFRECHTERHALTUNG VON VERBRENNUNG
PROCEDE LIE A LA COMBUSTION

(30) Priority: 15.09.2004 SE 0402223
(43) Date of publication of application: 12.09.2007
(73) Proprietor: AGA AB, 181 81 Lidingö (SE)
(72) Inventor: LUGNET, Anders, 762 92 Rimbo (SE); EKMAN, Tomas, S-132 37 Saltsjö-Boo (SE)
(74) Representative: Örtenblad, Bertil Tore
(86) International application number: PCT/SE2005/001194
(87) International publication number: WO 2006/031163

(56) References cited:
- EP-A2- 0 343 746
- EP-A2- 0 790 461
- US-A- 4 378 205
- US-A- 4 439 137
- US-A- 4 988 285
- US-A- 5 554 022
- US-A- 6 074 197
- US-A1- 2004 157 178
- US-B1- 6 196 831

## Description

The present invention relates to a method pertaining to combustion. More specifically, the invention relates to a method for the combustion of oxygen gas in respect of heating furnaces.

When combusting hydrocarbons in combination with high oxygen concentration, flame temperatures in excess of 2000 degrees C are normally reached, together with furnace atmospheres of very high partial pressures of carbon dioxide and steam. This results in drawbacks, such as high NOx-contents and local overheating problems.

US 4,439,137, US 6,074,197 and US 5,554,022 all show burner where fuel is injected at one location of the burner head and where oxidant is injected at two or more locations during the whole operation of the burner.

It is highly desirous to design burners that have emission diminishing properties.

The present invention satisfies this desideratum.

Accordingly, the present invention relates to a method pertaining to the combustion of a fuel with an oxidant in a heating furnace, wherein the fuel and the oxidant are delivered to a burner head being cylindrical, where in a first method step fuel and oxidant are caused to be emitted from the burner head in the close proximity of each other so that combustion will essentially be close to and at a small distance out from the burner head until there is reached in the furnace space a temperature that exceeds the spontaneous combustion temperature of the fuel, where in a second method step the fuel and the oxidant are caused to be emitted instead from the burner head at a mutual distance apart so that combustion will essentially take place at a distance from the burner head corresponding to at least the diameter of the burner head and outwards from the burner, wherein in said second method step the fuel is caused to be emitted only from a nozzle in the burner head and the oxidant is caused to be emitted only through outlet openings located on one side of and at a distance from said nozzle, wherein the method further comprises placing said outlet openings at a distance from the fuel nozzle that exceeds half the diameter of the burner head, wherein the oxidant is gaseous and is caused to have an oxygen content of 80 % or higher and wherein the method further comprises delivering the oxidant at an overpressure of at least 2 bar.

The invention will now be described in more detail, partly with reference to exemplifying embodiments of the invention illustrated in the accompanying drawings, in which
- Fig. 1 is a straight-on front view of a burner head used to carry out the method according to a first embodiment not covered by the present invention;
- Fig. 2 is a straight-on view of a burner head used to carry out the method according to a second embodiment not covered by the present invention;
- Fig. 3 is a diagrammatic illustration of a burner head used to carry out the method and a flame as seen from one side when the burner is operated in a first manner; and
- Fig. 4 is a diagrammatic illustration of a burner head used to carry out the method and a flame as seen from one side when the burner is operated in a second manner.

The inventive method thus pertains to the combustion of a fuel with an oxidant in a heating furnace, in which the fuel and the oxidant are delivered to a burner head. The burner head is mounted in a known matter in a furnace wall, so that the flame produced in the combustion process will extend into the furnace chamber.

According to the invention, the combustion process takes place in two steps, where the second step affords advantages over the known technology.

In a first method step, fuel and oxidant are emitted from the burner head in close relationship with one another, so that the process of combustion will essentially take place close to and slightly spaced from the burner head. This method is known per se, in which the burner is designated "Oxy-fuel"-burner.

In this first step of the method, the burner is operated until a temperature exceeding the spontaneous combustion temperature of the fuel is reached in the furnace chamber.

The second step of the combustion process may conveniently be initiated when the furnace temperature is above roughly 750 degrees C.

According to the invention, this second method step is carried out when this temperature or a still higher temperature has been reached. In this second method step, the fuel and the oxidant are caused instead to be emitted from the burner head at a distance from each other, so that combustion will take place generally at a distance from the burner head that corresponds at least to the diameter of the burner head and out from the burner.

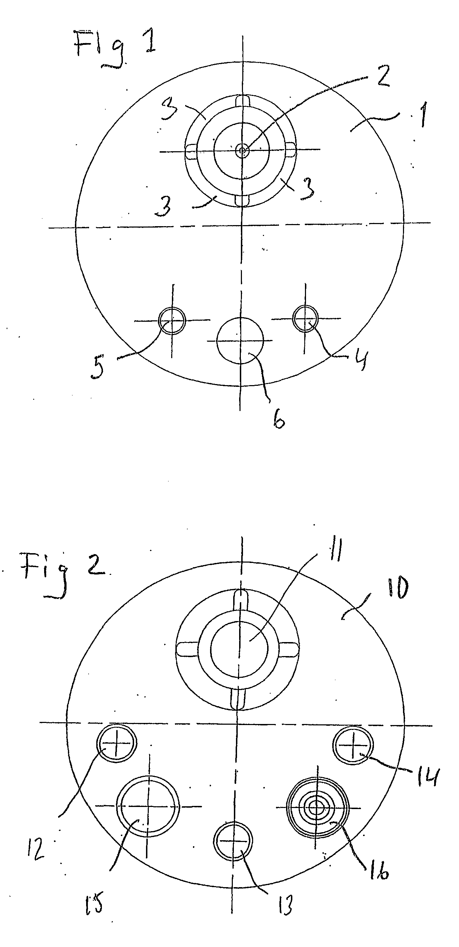

It is preferred that in the first method step the fuel is caused to be emitted from a nozzle 2 in the burner head 1 and the oxidant is caused to be emitted from outlet openings 3 placed concentrically around the nozzle 2; see figure 1.

It is also preferred that in the second method step, the fuel is caused to be emitted from a nozzle 2 in a burner head 1 and that the oxidant is emitted from outlet openings 4,5 located on one side of and at a distance from said nozzle 2; see figure 1.

According to one preferred embodiment not covered by the invention, the outlet openings 4, 5 are comprised of Laval nozzles or venturi-nozzles.

The opening 6 functions to monitor the flame.

According to the invention, the outlet openings 4, 5 are spaced from the fuel nozzle 2 by a distance that exceeds half the diameter of the burner head.

It has been found that a distance of about 40 mm suffices to afford the desired effect.

The burner thus permits two different *modus operandi,* partly as a typical oxy-fuel burner and partly as a burner which functions to produce a flame of essentially lower maximum temperature. This lower flame temperature is adapted to lie beneath the temperature at which the formation of NOx is limited by the reaction kinetics, this temperature being about 1550 degrees C.

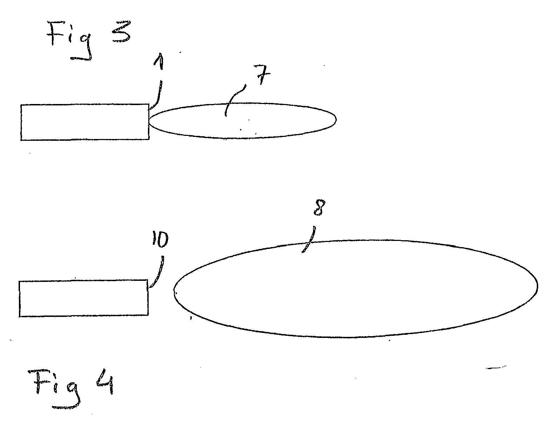

This is achieved by the aforesaid placement of the oxygen outlet openings 4, 5 and the fuel nozzle, whereby fuel and oxygen are combusted further away from the burner head in comparison with a conventional oxy-fuel-combustion process. This is illustrated in figures 3 and 4, where figure 3 illustrates the mutual relationship between the length and the propagation of the flames 7, 8 in the respect of oxy-fuel-combustion, and figure 4 illustrates the mutual relationship between the length and the propagation of said flames in the case of combustion according to the second step of the inventive method.

The concept of the invention resides in lowering the oxygen content in the combustion zone, despite the oxidant having an oxygen content of more than 80%, by virtue of separation, high pressure and an optimized nozzle placement. This is achieved with a nozzle configuration that affords a high subpressure on those surfaces of the nozzle that lack medium-emitting nozzles. As a result of the subpressure, flue gases are sucked in from the furnace atmosphere and quickly mix with the out flowing media and therewith create turbulence. The mixing medium, i.e. the furnace atmosphere, typically has an oxygen content of 0.5-10%. The remainder of the gas is comprised of CO₂ and H₂O and N₂ in varying mixtures.

Because CO₂, H₂O and N₂ do not actively take part in the combustion process, these constituents act as "combustion retardants". The dilution of the oxygen and the fuel is very high. Typically, oxygen concentrations of 7-15 % are reached in the combustion process, despite the use of pure oxygen. When applying the present invention there is obtained at process temperatures above said spontaneous combustion temperature a diffused but controlled combustion that significantly lowers the formation NOx gases, primarily NO and NO₂.

As a result, fuel and oxidant will be mixed with the furnace flue gases before the fuel and oxydant gases meet one another. This gives a larger and colder flame 8 in spite of the efficacy corresponding to that achieved when combustion is effected according to known technology. The nozzles can be directed conveniently straight forward, i.e. they need not be directed away from or towards each other, although they may be angled towards or away from the longitudinal axis of the burner head.

According to one preferred embodiment of the inventive method, the oxydant is gaseous and is given an oxygen concentration of 85 % or higher.

According to one significant feature of the inventive method, the oxidant is delivered to the burner at a pressure of at least 2 bar overpressure. Because the flame temperature is lower and the mixture of gas in the furnace volume is greater than in the case of oxy-fuel-combustion, the formation of NOx is minimized while the temperature differences in the furnace space are dramatically lowered at the same time.

In comparison with conventional combustion devices used in industrial processes, application of the inventive method results in a lowering of NOx formations by more than 90 %, without impairing the efficiency of the process and without the supply of substances other than those required for the combustion.

A burner nozzle not covered by the present invention is no larges than a known burner head for oxy-fuel-combustion. In a preferred embodiment not covered by the invention, the burner nozzle has a diameter of about 70mm.

The compact method enables the invention to be applied in equipment already possessed by the user. Moreover, the equipment can be placed in a small water-cooled protective casing for application at very high process temperatures.

The aforesaid advantages are achieved in accordance with the invention with a selected fuel, solid fuel, gaseous fuel or liquid fuel. The arrangement can replace existing combustion systems in principal without re-constructing the furnace equipment used for the process.

It is beneficial when the fuel used is oil, propane or natural gas.

The burner head shown in figure 1 is intended for oil as fuel.

Figure 2 shows a burner head 10 for natural gas as fuel. The nozzle 11 is intended for natural gas. The outlet openings 12, 13, 14 are intended for the oxidant. The opening 15 is intended for monitoring the flame and the opening 16 is intended for a pilot flame.

Because oxidant and the fuel nozzles can be directed straight forwards, there is obtained a construction that is inexpensive, easy to maintain and can be applied in existing processes without requiring measures other than the exchange of the nozzle construction.

The oxidant is injected into the combustion space via one or more nozzles in the form of Laval nozzles or venturi nozzles. The oxidant will preferably be under an overpressure of at least 2 bar. The higher the pressure, the better the efficacy of the invention. A preferred pressure for normal applications is 4-5 bar. The fuel is injected via conventional nozzles at the pressure available.

Although the burner head not covered by the present invention has been described above with reference to a number of exemplifying embodiments it will be understood that the design of the burner head can be varied. For instance, the burner head may include more oxidant outlet openings than those shown. Moreover, the placement of the fuel nozzle may be different to that shown in the drawings.

## Claims

1. A method pertaining to the combustion of a fuel with an oxidant in a heating furnace, wherein the fuel and the oxidant are delivered to a burner head being cylindrical, where in a first method step fuel and oxidant are caused to be emitted from the burner head (1; 10) in the close proximity of each other so that combustion will essentially be close to and at a small distance out from the burner head until there is reached in the furnace space a temperature that exceeds the spontaneous combustion temperature of the fuel, where in a second method step the fuel and the oxidant are caused to be emitted instead from the burner head (1; 10) at a mutual distance apart so that combustion will essentially take place at a distance from the burner head corresponding to at least the diameter of the burner head and outwards from the burner, wherein in said second method step the fuel is caused to be emitted only from a nozzle (2;11) in the burner head and the oxidant is caused to be emitted only through outlet openings (4,5;12-14) located on one side of and at a distance from said nozzle, wherein the method further comprises placing said outlet openings (4,5;12-14) at a distance from the fuel nozzle (2;11) that exceeds half the diameter of the burner head (1;10), wherein the oxidant is gaseous and is caused to have an oxygen content of 80 % or higher and wherein the method further comprises delivering the oxidant at an overpressure of at least 2 bar.

2. A method according to claim 1, wherein in the first method step the fuel is caused to be emitted from a nozzle (2;11) in the burner head (1;10), and the oxidant is caused to be emitted concentrically (3) around said nozzle.

3. A method according to any one of the preceding claims, wherein the method further comprises using oil as the fuel.

4. A method according to any one of the preceding claims 1 or 2, wherein the method further comprises using natural gas or propane as the fuel.

## Patentansprüche

1. Verfahren zur Aufrechterhaltung der Verbrennung eines Brennstoffes mit einem Oxidationsmittel in einem Heizofen, wobei der Brennstoff und das Oxidationsmittel an einen zylindrischen Brennerkopf abgegeben werden,
wobei in einem ersten Verfahrensschritt Brennstoff und Oxidationsmittel veranlasst werden, aus dem Brennerkopf (1; 10) in nächster Nähe voneinander ausgegeben zu werden, sodass die Verbrennung im Wesentlichen in der Nähe und in einem kleinem Abstand von dem Brennerkopf erfolgt, bis im Ofenraum eine Temperatur erreicht wird, welche die spontane Verbrennungstemperatur des Brennstoffs überschreitet,
wobei in einem zweiten Verfahrensschritt der Brennstoff und das Oxidationsmittel veranlasst werden, anstatt von dem Brennerkopf (1; 10), in einem gegenseitigen Abstand voneinander ausgegeben zu werden, sodass die Verbrennung im Wesentlichen in einem Abstand von dem Brennerkopf, der mindestens dem Durchmesser des Brennerkopfes entspricht, und auswärts des Brenners erfolgt,
wobei im zweiten Verfahrensschritt der Brennstoff veranlasst wird, nur aus einer Düse (2; 11) im Brennerkopf ausgegeben zu werden und das Oxidationsmittel veranlasst wird, nur durch Auslassöffnungen (4,5; 12-14), die auf einer Seite und in einem Abstand von der Düse angeordnet sind, ausgegeben zu werden,
wobei das Verfahren ferner das Anordnen der Auslassöffnungen (4,5; 12-14) in einem Abstand von der Brennstoffdüse (2; 11) umfasst, welche die Hälfte des Durchmessers des Brennerkopfes (1; 10) überschreitet; wobei das Oxidationsmittel gasförmig ist und veranlasst wird, einen Sauerstoffgehalt von 80 % oder mehr aufzuweisen und wobei das Verfahren ferner das Abgeben des Oxidationsmittels bei einem Überdruck von mindestens 2 Bar umfasst.

2. Verfahren nach Anspruch 1, wobei im ersten Verfahrensschritt der Brennstoff veranlasst wird, aus der Düse (2; 11) im Brennerkopf (1; 10) ausgegeben zu werden und das Oxidationsmittel veranlasst wird, konzentrisch (3) um die Düse ausgegeben zu werden.

3. Verfahren nach einem der vorhergehenden Ansprüche, wobei das Verfahren ferner das Verwenden von Öl als Brennstoff umfasst.

4. Verfahren nach einem der vorhergehenden Ansprüche 1 oder 2, wobei das Verfahren ferner das Verwenden von Erdgas oder Propangas als Brennstoff umfasst.

## Revendications

1. Procédé se rapportant à la combustion d'un combustible avec un oxydant dans un four de chauffe, le combustible et l'oxydant étant amenés jusqu'à un tête de brûleur qui est cylindrique, où il est fait en sorte, lors d'une première étape du procédé, que du combustible et de l'oxydant soient émis à partir de la tête de brûleur (1 ; 10) à proximité immédiate l'un de l'autre de telle façon que la combustion soit essentiellement proche de et à une faible distance de la tête de brûleur jusqu'à ce que soit atteinte, dans l'espace du four, une température qui dépasse la température de combustion spontanée du combustible, où il est fait en sorte, lors d'une deuxième étape du procédé le combustible et l'oxydant soient plutôt émis à partir de la tête de brûleur (1 ; 10) à une distance mutuelle l'un de l'autre de telle façon que la combustion ait lieu essentiellement à une distance de la tête de brûleur correspondant à au moins le diamètre de la tête de brûleur et vers l'extérieur par rapport au brûleur, dans lequel, lors de ladite deuxième étape du procédé, il est fait en sorte que le combustible soit émis uniquement à partir d'une buse (2 ; 11) dans la tête de brûleur et il est fait en sorte que l'oxydant soit émis uniquement à travers des ouvertures (4, 5 ; 12-14) de sortie situées sur un côté de et à une certaine distance de ladite buse, le procédé comportant en outre le positionnement desdites ouvertures (4, 5 ; 12-14) de sortie à une distance de la buse (2 ; 11) de combustible qui dépasse la moitié du diamètre de la tête de brûleur (1 ; 10), dans lequel l'oxydant est gazeux et il est fait en sorte qu'il présente une teneur en oxygène d'au moins 80% et le procédé comportant en outre l'amenée de l'oxydant à une surpression d'au moins 2 bar.

2. Procédé selon la revendication 1, dans lequel, lors de la première étape du procédé, il est fait en sorte que le combustible soit émis à partir d'une buse (2 ; 11) dans la tête de brûleur (1 ; 10), et il est fait en sorte que l'oxydant soit émis de façon concentrique (3) autour de ladite buse.

3. Procédé selon l'une quelconque des revendications précédentes, le procédé comportant en outre l'utilisation de pétrole en tant que combustible.

4. Procédé selon l'une quelconque des revendications 1 ou 2 précédentes, le procédé comportant en outre l'utilisation de gaz naturel ou de propane en tant que combustible.
